(19) Europäisches Patentamt
European Patent Office
Office européen des brevets

(11) Publication number : 0 445 588 B1

# (12) EUROPEAN PATENT SPECIFICATION

(45) Date of publication of patent specification : **05.01.94 Bulletin 94/01**

(51) Int. Cl.$^5$ : **C08G 81/00**, C08G 73/10, C08G 75/14

(21) Application number : **91102493.3**

(22) Date of filing : **21.02.91**

## (54) Method for preparing polyarylene sulfide-polyimide copolymers.

(30) Priority : **05.03.90 US 489146**

(43) Date of publication of application : **11.09.91 Bulletin 91/37**

(45) Publication of the grant of the patent : **05.01.94 Bulletin 94/01**

(84) Designated Contracting States : **DE ES FR GB IT NL**

(56) References cited :
**EP-A- 0 154 714**
**US-A- 4 429 102**
**JOURNAL OF POLYMER SCIENCE: Polymer Chemistry Edition vol. 13, no. 8, August 1975, NEW YORK US pages 1819 - 1842; CRIVELLO et al.: "POLYIMIDOTHIOETHER-POLYSULFIDE BLOCK POLYMERS"**

(73) Proprietor : **GENERAL ELECTRIC COMPANY**
**1 River Road**
**Schenectady, NY 12345 (US)**

(72) Inventor : **Iwanowicz, Edwin Jan**
**680 Salvia Lane**
**Schenectady, New York 12303 (US)**
Inventor : **Takekoshi, Tohru**
**171 Droms Road**
**Scotia, New York 12302 (US)**
Inventor : **Caruso, Andrew James**
**283 Stoodley Place**
**Schenectady, New York 12303 (US)**
Inventor : **Han, Choong Yol**
**3 Caratina Avenue**
**Pittsfield, Massachusetts 01201 (US)**
Inventor : **McCracken, Linda Leigh**
**2224 Huntridge Drive**
**Clifton Park, New York 12065 (US)**

(74) Representative : **Pratt, Richard Wilson et al**
**London Patent Operation G.E. Technical Services Co. Inc. Essex House 12/13 Essex Street**
**London WC2R 3AA (GB)**

EP 0 445 588 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the preparation of polyarylene sulfide copolymers with improved thermal and ductility properties, and more particularly to the preparation of polyarylene sulfide-polyimide copolymers.

Polyarylene sulfides, as illustrated by polyphenylene sulfide, are crystalline engineering thermoplastics with high crystalline melting temperatures, typically on the order of 285°C. They are characterized by such advantageous properties as high modulus and excellent resistance to aggressive chemicals and solvents.

However, the glass transition temperatures of polyarylene sulfides are low; for example, that of polyphenylene sulfide is only 85°C. As a consequence, heat distortion temperatures are low in the absence of reinforcement with fillers such as glass fiber. For example, the heat distortion temperature of polyphenylene sulfide is about 110°C. In addition, polyarylene sulfides are very brittle, as evidenced by a tensile elongation for polyphenylene sulfide no greater than about 2.5% and frequently below 1%.

It has been proposed to improve the properties of polyarylene sulfides by blending with other polymers having properties such as high heat distortion temperature and good ductility. In preparing such blends, the presence of a compatibilizing copolymer is often advantageous. Thus, for example, blends of polyarylene sulfides and polyimides can be compatibilized by incorporating therein a polyarylene sulfide-polyimide copolymer.

In U.S. Patent 4,769,424, there is disclosed a method for preparing polyarylene sulfide-polyetherimide block copolymers by the reaction of an amine-terminated polyarylene sulfide with an aromatic bis(ether anhydride) and a diamine. It is generally difficult to conduct this reaction efficiently by reason of the difference in viscosities of the reagents employed. In particular, the diamine and dianhydride in their liquid state have relatively low viscosity while the amine-terminated polyarylene sulfide, when melted, is a very high viscosity material. The disclosed method of preparing the copolymers requires the use of a dipolar aprotic solvent such as N-methylpyrrolidone to match the viscosity of the polyarylene sulfide with those of the polyetherimide-forming reagents. Such solvents are quite expensive.

It would be desirable to provide a method for the preparation of copolymers of this type which can conveniently be conducted without the use of expensive solvents or the like. Such a method is provided by the present invention.

Accordingly, the invention is a method for preparing a composition comprising polyarylene sulfide-polyimide copolymers which comprises melt blending a polyarylene sulfide containing primary amino substituents with a polyimide containing terminal dicarboxylic acid groups or functional derivatives thereof, selected from anhydrides, imides or esters.

The polyarylene sulfides which are amine-functionalized for employment in the method of this invention are known polymers containing arylene groups separated by sulfur atoms. They include polyphenylene sulfide (hereinafter sometimes designated "PPS") and substituted polyphenylene sulfides. By reason of its availability and relatively low cost, PPS is often preferred.

It is often impracticable to determine the molecular weight of a polyarylene sulfide, by reason of its insolubility in essentially all solvents used for molecular weight determination. Indirect characterization of relative molecular weight by melt flow characteristics is commonly employed. For the purposes of this invention, the melt flow characteristics of the polyarylene sulfide are not critical; values in the range of about 20-500 g./10 min. (315°C, 5 kg. load) are typical. However, it will be explained hereinafter that one embodiment of the invention results in cleavage of the polyarylene sulfide chain, in which case the melt flow of the original polymer should often be less than the value desired in the product.

For the purposes of the invention, it is necessary that the polyarylene sulfide contain primary amino substituents. Such substituents may be provided in a number of ways. One of these, disclosed in the aforementioned U.S. Patent 4,769,424, comprises the reaction of a dihalodiaryl sulfide with an alkali metal sulfide to form a halogen-terminated polyarylene sulfide, which then undergoes further reaction with an aminothiophenol with elimination of hydrogen halide to form an amine-terminated polyarylene sulfide.

A second method, disclosed and claimed in EP 90 109 672.7 is the reaction of a polyarylene sulfide with a bis(aminoaryl) disulfide such as bis(4-aminophenyl) disulfide. Said reaction typically occurs at temperatures in the range of about 225-375°C, in the melt or in solution in a suitable high boiling solvent such as 1-chloronaphthalene. In a third method, the polyarylene sulfide is prepared by the reaction of an alkali metal sulfide with a mixture of dichloroaromatic compounds including at least one such compound which contains a primary amino group.

It is known that polyarylene sulfides can be "cured" by heating in contact with an oxygen-containing gas (usually air) at temperatures above about 200°C, resulting in a substantial decrease in melt flow and, apparently, a concomitant increase in molecular weight. While the exact nature of the curing reaction is not known, it appears to involve branching and/or chain extension, which probably occurs thermally or by oxidation of some type. The polyarylene sulfides employed in the method of this invention are preferably cured before blending

with the polyimide. Typical curing conditions are in the solid or liquid state at temperatures in the range of about 250-350°C, for time periods of about 2-6 hours.

The polyimides employed in the method of this invention include all known polymers of this type. They are typically prepared by the reaction of a tetracarboxylic acid dianhydride with a diamine.

Suitable diamines include principally arylene diamines, especially m- and p-phenylenediamine, and amino-terminated polydiorganosiloxanes such as 1,9-diamino-4,4,6,6-tetramethyl-4,6-disila-5-oxanonane. Other diamines which may be employed include those disclosed, for example, in U.S. Patent 4,448,937.

Suitable dianhydrides include, for example, pyrromellitic dianhydride, 3,3',4,4'-tetracarboxybenzophenone dianhydride, 3,4-dicarboxyphenyl ether dianhydride, and, preferably, dianhydrides of the formula

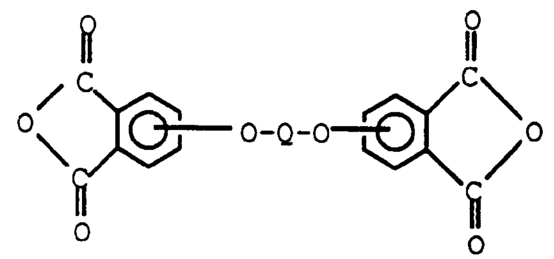

,

wherein Q is

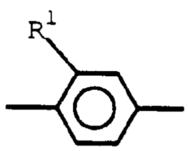

,

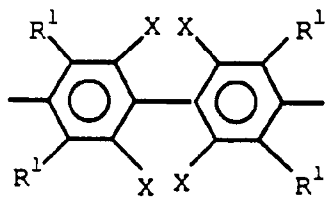

or

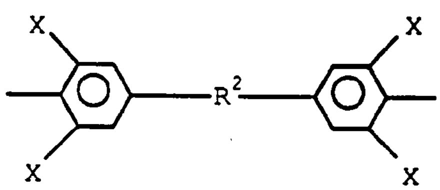

,

each $R^1$ is independently hydrogen or methyl, $R^2$ is a straight-chain or branched alkylene radical containing 1-5 carbon atoms and each X is independently hydrogen or halogen (usually chlorene or bromine). The 2,2-bis[4-(dicarboxyphenoxy)phenyl]propane dianhydrides are especially preferred; either the 2,3-dicarboxy or the 3,4-dicarboxy isomer may be employed. The latter, hereinafter sometimes designated "BPADA", is most preferred.

The polyimide must contain terminal dicarboxylic acid groups or functional derivatives thereof, in order to provide a site for reaction with the amine groups of the polyarylene sulfide. The concentration of such groups is typically about 0.02-0.15 meq./g. By "functional derivative" is meant anhydrides, imides or esters; anhydride derivatives are preferred. Polyimides having the necessary terminal groups are easily prepared by employing a slight excess of dianhydride, the molecular weight of the product being dependent on the proportion of dianhydride employed.

According to the method of this invention, the copolymer is prepared by melt blending. For this purpose, the amine-functionalized polyarylene sulfide and the polyimide are blended under melt conditions in appropriate ratios, typically about 0.1-10.0:1 (by weight). Any type of melt blending procedure may be employed, with extrusion frequently being convenient. Suitable blending temperatures may be readily determined according to criteria known in the art, and are typically in the range of about 250-350°C.

It is generally found that the properties of the copolymer compositions improve in a manner roughly proportional to the concentration of amine groups in the polyarylene sulfide. Said concentration is preferably about 0.005-0.25 and most preferably about 0.01-0.25 milliequivalent per gram.

The compositions of this invention generally contain free polyarylene sulfide and polyimide, frequently in substantial proportions, in addition to copolymer. This is permissible since, as previously observed, the copolymer therein serves as a compatibilizer for the individual polymer constituents. It has been found that said compositions have substantially higher heat distortion temperatures and tensile elongations than the corresponding polyphenylene sulfides.

The method of this invention is illustrated by the following examples. The polyarylene sulfide employed in each example was prepared by extruding a commercially available cured PPS with bis(4-aminophenyl) disulfide at a temperature of about 300°C followed by pelletization, with disulfide proportions varied to yield polymers having a range of amine group concentrations, followed in certain examples by curing in air at 250-260°C for various periods. The polyetherimide was prepared conventionally from BPADA and m-phenylenediamine, using the BPADA in slight excess so as to provide an anhydride-terminated product of suitable molecular weight.

## Examples 1-4

Dry blends were prepared from 1800 grams of a polyetherimide having a degree of polymerization of 33 and an anhydride concentration of 0.056 milliequivalent per gram, and 1800 grams of amine-functionalized PPS samples which originally had an amine group concentration of 0.04 milliequivalent per gram and which (in Examples 2-4) had been cured for various periods. The blends were melt processed by extrusion in a counterrotating twin-screw extruder at temperatures from 232 to 335°C, and the extrudates were quenched in water and pelletized. The product of Example 2 was exhaustively extracted with chloroform to remove polyetherimide homopolymer, which was then isolated by solvent evaporation and weighed to determine the extent of copolymer formation. All products were molded into test specimens which were subjected to ASTM test procedures for tensile elongation and heat distortion temperature at 1.8 MPa. The results are given in Table I, in comparison with a control in which the PPS alone was tested.

TABLE I

| | Example | | | | |
|---|---|---|---|---|---|
| | 1 | 2 | 3 | 4 | Control |
| Curing time, hrs. | 0 | 4 | 6 | 8 | -- |
| Copolymerized polyetherimide, % | -- | 74 | -- | -- | -- |
| Tensile elongation, % | 3.85 | 4.87 | 5.88 | 5.93 | 2.70 |
| Heat distortion temp., °C | 140 | 161 | 186 | 181 | 113 |

## Examples 5-7

The procedure of Examples 1-4 was repeated, employing PPS samples with various amine group concentrations which had been cured for 4 hours and a polyetherimide having an anhydride group concentration of 0.093 meq./gram. In addition to the tensile elongation and heat distortion temperature determinations, a sample was cut and extracted exhaustively with chloroform to remove homopolymeric polyetherimide, after which the morphology was evaluated by examining the cavities remaining; the quality of the morphology increases with decreasing cavity size which indicates effective and uniform dispersion of small homopolymeric polyetherimide particles. The results are given in Table II.

TABLE II

| | Example 5 | Example 6 | Example 7 |
|---|---|---|---|
| PPS amine group concentration, meq./g. | 0.008 | 0.040 | 0.120 |
| Ratio, anhydride/amine groups | 11.6 | 2.3 | 0.78 |
| Copolymerized polyetherimide, % | <10 | 74 | 67 |
| Tensile elongation, % | 5.6 | 5.4 | 4.9 |
| Heat distortion temp., °C | 177 | 178 | 185 |
| Morphology | Poor | Excellent | Good |

## Claims

1. A method for preparing a composition comprising polyarylene sulfide-polyimide copolymers which comprises melt blending a polyarylene sulfide containing primary amino substituents with a polyimide containing terminal dicarboxylic acid groups or functional derivatives thereof, selected from anhydrides, imides or esters.

2. A method according to claim 1 wherein the polyarylene sulfide is a polyphenylene sulfide.

3. A method according to claim 2 wherein the polyimide contains terminal anhydride groups.

4. A method according to claim 3 wherein the amine group concentration in the polyphenylene sulfide is 0.005-0.25 meq./g.

5. A method according to claim 3 wherein the anhydride group concentration in the polyimide is 0.02-0.15 meq./g.

6. A method according to claim 5 wherein the polyphenylene sulfide has been cured prior to blending with the polyimide.

7. A method according to claim 5 wherein the weight ratio of polyphenylene sulfide to polyimide is 0.1-10.0:1.

8. A method according to claim 5 wherein the polyimide is prepared by the reaction of 2,2-bis[4-(3,4-dicarboxyphenoxy)phenyl]propane dianhydride with at least one diamine.

9. A method according to claim 8 wherein the diamine is m-phenylenediamine or p-phenylenediamine.

10. A method according to claim 8 wherein the polyphenylene sulfide has been cured prior to blending with the polyimide.

## Patentansprüche

1. Verfahren zur Herstellung einer Polyarylensulfidpolyimidcopolymere enthaltenden Zusammensetzung, welches das Schmelzmischen eines primäre Aminosubstituenten enthaltenden Polyarylensulfids mit einem Polyimid umfaßt, welches endständige Dicarbonsäuregruppen oder funktionelle Derivate derselben, ausgewählt aus Anhydriden, Imiden oder Estern, enthält.

2. Verfahren nach Anspruch 1, worin das Polyarylensulfid ein Polyphenylensulfid ist.

3. Verfahren nach Anspruch 2, worin das Polyimid endständige Anhydridgruppen enthält.

4. Verfahren nach Anspruch 3, worin die Konzentration der Amingruppe in dem Polyphenylensulfid 0,005 - 0,25 meq/g beträgt.

5. Verfahren nach Anspruch 3, worin die Konzentration der Anhydridgruppe in dem Polyimid 0,02 - 0,15

meq/g beträgt.

6. Verfahren nach Anspruch 5, worin das Polyphenylensulfid vor dem Mischen mit dem Polyimid gehärtet worden ist.

7. Verfahren nacch Anspruch 5, worin das Gewichtsverhältnis des Polyphenylensulfids zum Polyimid 0,1 - 10,0 : 1 beträgt.

8. Verfahren nach Anspruch 5, worin das Polyimid durch Reaktion von 2,2-bis[4-(3,4-Dicarboxyphenoxy)phenyl]propandianhydrid mit wenigstens einem Diamin hergestellt wird.

9. Verfahren nach Anspruch 8, worin das Diamin m-Phenylendiamin oder p-Phenylendiamin ist.

10. Verfahren nach Anspruch 8, worin das Polyphenylensulfid vor dem Mischen mit dem Polyimid gehärtet worden ist.

## Revendications

1. Procédé de préparation d'une composition comprenant des copolymères poly(sulfure d'arylène)-polyimide, qui comprend le mélange à l'état fondu d'un poly(sulfure d'arylène) renfermant des substituants amino primaire avec un polyimide contenant des groupes terminaux qui sont des groupes acide dicarboxylique ou des dérivés fonctionnels de tels groupes, choisis parmi les anhydrides, les imides et les esters.

2. Procédé selon la revendication 1, dans lequel le poly(sulfure d'arylène) est un poly(sulfure de phénylène).

3. Procédé selon la revendication 2, dans lequel le polyimide contient des groupes terminaux qui sont des groupes anhydride.

4. Procédé selon la revendication 3, dans lequel la concentration de groupes amino dans le poly(sulfure de phénylène) est de 0,005 à 0,25 meq./g.

5. Procédé selon la revendication 3, dans lequel la concentration de groupes anhydride dans le polyimide est de 0,02 à 0,15 meq./g.

6. Procédé selon la revendication 5, dans lequel le poly(sulfure de phénylène) a été cuit avant le mélange avec le polyimide.

7. Procédé selon la revendication 5, dans lequel le rapport en poids du poly(sulfure de phénylène) au polyimide est de 0,1:1 à 10,0:1.

8. Procédé selon la revendication 5, dans lequel le polyimide est préparé par la réaction du dianhydride de 2,2-bis[4-(3,4-dicarboxyphénoxy)phényl]propane avec au moins une diamine.

9. Procédé selon la revendication 8, dans lequel la diamine est la m-phénylènediamine ou la p-phénylènediamine.

10. Procédé selon la revendication 8, dans lequel le poly(sulfure de phénylène) a été cuit avant le mélange avec le polyimide.